# EUROPEAN PATENT APPLICATION

(11) **EP 4 534 735 A1**
(43) Date of publication of application: **09.04.2025**
(21) Application number: 23201952.1
(22) Date of filing: 05.10.2023
(51) Int. Cl.: C25D 7/04, C25D 17/06, C25D 17/00, B25J 15/00

(54) **DEVICE FOR HOLDING AND ELECTRICALLY CONTACTING A HOLLOW WORKPIECE AND APPARATUS FOR ELECTROCHEMICAL TREATMENT**

(71) Applicant: Atotech Deutschland GmbH & Co. KG, 10553 Berlin (DE)
(72) Inventor: Ross, Thorsten, 10553 Berlin (DE); Gerstenberger, Reiner, 10553 Berlin (DE); Held, Patrick, 10553 Berlin (DE); Seuß, Steffen, 10553 Berlin (DE)
(74) Representative: MKS IP Association

(57) **Abstract**

A device for holding and electrically contacting a hollow workpiece (1), for insertion with at least a free end (3) in an axial direction into an interior of the hollow workpiece (1), comprises a first member (10) and a second member (11) for engaging the hollow workpiece (1). At least the first member (10) is electrically conducting and comprises at least one terminal (15) for electrically connecting the first member (10) to an electrical current supply. The first and second members (10,11) are oriented to extend at least predominantly parallel to the device axis (13). The device comprises guide parts (19a,b) for guiding relative movement of the first and second members (10,11). At least a component of the relative movement is a displacement transverse to the device axis (13). The guide parts (19a,b) comprise at least one guide part fixed in position with respect to the first member (10) and engaging a further guide part at a respective engagement location, the engagement permitting relative motion. The engagement locations are separate from the at least one terminal (15).

## Description

### Technical Field

The invention relates to a device for holding and electrically contacting a hollow workpiece, for insertion with at least a free end in an axial direction into an interior of the hollow workpiece, which device comprises a first member and a second member for engaging the hollow workpiece,
wherein at least the first member is electrically conducting and comprises at least one terminal for electrically connecting the first member to an electrical current supply,
wherein the first and second members are oriented to extend at least predominantly parallel to the device axis,
wherein the device comprises guide parts for guiding relative movement of the first and second members,
wherein at least a component of the relative movement is a displacement transverse to the device axis, and
wherein the guide parts comprise at least one guide part fixed in position with respect to the first member and engaging a further guide part at a respective engagement location, the engagement permitting relative motion.

The invention also relates to a device for holding and electrically contacting a plurality of hollow workpieces.

The invention also relates to an apparatus for electrochemical treatment of at least a respective exterior surface of at least one hollow workpiece.

### Background Art

US 2012/0244374 A1 discloses a device for coating a workpiece comprising a holder which dips into an interior of the workpiece, the holder having at least two clamping legs which bear diametrically against an inner circumferential wall, one clamping leg acting along a clamping line running in an approximately parallel fashion, and the other clamping leg acting diametrically in relation thereto in an approximately punctiform fashion. The clamping legs are embodied as contact elements for making electrical contact. The clamping legs are resiliently formed. The disclosure is explained with reference to the electroplating of a pole tube. In the illustrated embodiment, a total of 64 pairs of clamping legs are provided for holding 64 pole tubes on a frame. Four planes of pairs of clamping legs are provided, with two pairs of clamping legs, which are arranged relative to one another approximately in the shape of a V, being respectively provided in each plane and fastened via a common base on a frame strut running horizontally. A problem of this arrangement is that the workpieces have to be slid onto a pair of clamping legs individually, which takes time. The frame cannot be used to pick up the workpieces. Indeed, resilient clamping legs generally cannot be used to pick up a hollow workpiece, hold the workpiece during electrochemical processing and then release the workpiece. This limits the achievable throughput of an electrochemical apparatus using such a device.

CN 113930826 A discloses an adjusting tool for rapid loading and unloading for anodic oxidation of large cylindrical aluminium parts. The tool has the shape of an inverted umbrella and comprises a main base, a main rod, a round supporting rod, a rotating screw head, a rotating seat, a top block seat, a top block, a base bolt, a top block bolt, a main base fastening nut, a main rod locking nut and a conductive row. The rotating screw rotates on the main rod to drive the circular support rod and the top block to perform internal and external telescopic movement. The top block thereby moves outwards and is attached to the inner cavity of the cylindrical aluminium alloy part. At that moment, the top block applies a radial outward-acting force to the inner cavity of the cylindrical aluminium alloy part, so that a huge friction force is generated between the top block and the inner cavity of the cylindrical aluminium alloy part. Under the action of the friction force, rapid loading and unloading of the cylindrical aluminium alloy part can be achieved by lifting or lowering the main rod. The conductive row is used for connecting the cylindrical aluminium alloy part and an anode bar. The conductive row is clamped by rotating the main rod locking nut. Under the premise of ensuring the conductive requirement, the contact area between the outer end surface of the top block and the surface of the inner cavity of the cylindrical aluminium alloy part is reduced as much as possible. The shape and structure of an outer end surface of the top block and the surface of the inner cavity of the cylindrical aluminium alloy part are reduced as much as possible. Preferably, the conductive row in the adjusting tool is made of an aluminium alloy material and the remaining components are made of a titanium alloy material. Due to the rotary joints at the ends of the support rods and the small contact area between the top blocks and the inner surface of the part to be treated, there is a relatively large voltage drop across the tool. For treating the exterior surface of the part, the top blocks could be increased in size, but the voltage drop across the pantograph mechanism would remain.

CN 208151513 U discloses a plating jig for plating the outer surface of a cylindrical product. A threaded rod is fixed on the cathode of an electroplating tank. A rotating sleeve is threaded onto the threaded rod. The sleeve can be moved up and down by rotation on the threaded rod. The lower end of the threaded rod is welded with a fixed ring. A movable ring is located below the rotating sleeve. An upper end of the fixed ring is hinged with four lower struts along the circumferential direction and a lower end of the movable ring is hinged with four upper struts along the circumferential direction. An arc-shaped top moving plate is hinged between a respective lower strut and upper strut. The threaded rod is also sleeved with a pull ring and a spring is installed between the pull ring and each top moving plate. When electroplating is completed and the electroplated part needs to be taken off, the rotating sleeve is screwed upwards and the top moving plates move towards the threaded rod under the pulling force of the springs. If the threaded rod is indeed fixed to the cathode of the electroplating tank, as disclosed, then the current will need to pass across gaps in the joints at the ends of the upper and lower struts and gaps between the threaded rod and the pull ring and movable ring. Furthermore, the top moving plates contact the inside of the tubular workpiece over only a minority of the length of the tubular workpiece. This has a negative impact on the electrical resistance of the jig, the achievable uniformity of surface treatment in longitudinal direction and the ability to control the orientation of the workpiece, i.e. prevent skew when the workpiece is lowered into an electrochemical treatment cell.

### Summary of Invention

It is an object of the invention to provide devices and an apparatus of the types mentioned above in the opening paragraphs in which the device can be used to pick up the hollow workpiece and submerge the workpiece in a bath of an electrochemical treatment cell in which the workpiece forms an electrode, which are suitable for relatively uniform and efficient treatment of the exterior surface of the workpiece.

This object is achieved according to a first aspect by the device according to the invention, which is characterised in that the engagement locations are separate from the at least one terminal.

Because the engagement locations are separate from the at least one terminal, the current path for the current fed through the first member between the electrical current supply and the workpiece bypasses the engagement locations. The interface between the guide parts can therefore be optimised for the guidance function. In particular, the guide parts need not engage each other tightly in order to minimise the electrical resistance across the interface.

It follows that the overall resistance of the device can be relatively small, so that there is a small voltage drop across the device. The treatment can thus be relatively efficient, in that ohmic losses in the device are relatively small. Furthermore, the risk of bypass currents that bypass the workpiece when the device holding the workpiece is submerged in an electrolyte is reduced, because the path of least resistance will be through the first member and thus the workpiece.

These features make the device suitable for conducting relatively large currents. In a particular embodiment, the device may be adapted to conduct a current in the range of 750 - 1000 A to or from the workpiece, for example.

Because the first and second members engage the hollow workpiece on the inside, they can have a relatively large area of contact with the workpiece whilst leaving the exterior surface of the workpiece uncovered. This allows the exterior surface to be maintained at a relatively uniform potential, resulting in relatively uniform treatment.

In use, the device is inserted in an axial direction, with respect to the device axis, into the interior of the hollow workpiece. The first and second members are displaced radially outwards (with respect to the device axis) to clamp the workpiece from the inside and hold the workpiece by friction. In principle, a shape-lock between at least one of the first and second members and the workpiece is also possible. Prior to insertion, the first and second members are displaced radially inwards to avoid contact with the workpiece during insertion.

Although this description will focus mainly on embodiments in which the first and second members form a pair arranged diametrically opposite each other with respect to the device axis, there may be a third member, with the first, second and third members arranged about the device axis. Equally, there may be a pair of a third and fourth member. If the device is arranged to hold the workpiece through engagement with only the first and second members, at least the section of the device that is insertable into the interior of the workpiece can be relatively slender.

The terminal for electrically connecting the first member to an electrical current supply need not be a terminal forming a plug or socket, but may simply be a section of the first member in electrical contact with a further current-carrying part. The terminal may, for example, be formed by a section of the first member that is axially distal to the free end of the device, e.g. a section comprising an end of the first member that is axially opposite an end proximal to the free end of the device.

The first and second members extend predominantly parallel to the device axis meaning that their body axes are at an acute angle or parallel to the device axis, e.g. an angle smaller than 15° or even smaller than 5° or smaller than 0°. This allows them to be displaced radially outwards to engage the interior surface of a workpiece having a generally cylindrical interior over a relatively large distance in axial direction. That in turn contributes to relatively uniform treatment of the workpiece, since the voltage drop across the workpiece is mainly from the interior to the exterior surface.

The first and second members are not merely hingedly interconnected. They therefore do not merely pivot or bend to contact the interior surface of the workpiece. Instead, there are guide parts for guiding relative movement of the first and second members, and at least a component of the relative movement is a displacement transverse to the device axis. The displacement is a relative displacement of the entire member. If the members were to be connected by a hinge or pivot point, that point would, by contrast, remain stationary. The effect of this difference is to provide relatively uniform contact pressure on the interior surface of the workpiece over a relatively long axial distance.

The interior of the workpiece may be open at both of opposite ends or be formed by a recess. In some cases, the interior may be cylindrical. The exterior surface can have a different shape, e.g. be more irregular. In other uses, the workpiece may be a hollow cylindrical workpiece.

In an embodiment of the device, the first and second members are elongated members, and longitudinal axes of the first and second members extend at least predominantly parallel to the device axis.

The longitudinal axes are thus at an acute angle or parallel to the device axis, e.g. an angle smaller than 15° or even smaller than 5° or smaller than 0°. This embodiment is suitable for workpieces of which at least the hollow interior has a relatively high aspect ratio, e.g. a cylinder with a small diameter relative to the length of the cylinder. There is a relatively long line of contact. Treatment is relatively uniform in axial direction.

In an embodiment of the device, the relative movement preserves the orientation of the first and second members predominantly parallel to the device axis.

The orientation of one or both of the first and second members, e.g. the first member, may remain constant. Alternatively, the orientation of the other or both of the first and second members may change, but remain predominantly parallel to the device axis. There is thus a relatively uniform contact in axial direction. Furthermore, the risk of skew of the workpiece with respect to the device axis is reduced. In use, the device determines the orientation with respect to a counter-electrode. Minimising skew ensures that the distance to the counter-electrode does not vary too much in axial direction.

In an embodiment of the device, at least an axial section of the device extending to the free end is insertable into the interior of the hollow workpiece, and at least some of the guide parts are located in the insertable axial section.

This allows the first and second members to be relatively slender and elongated without bending on contact with the interior surface of the workpiece or even buckling.

In an example of any embodiment in which at least an axial section of the device extending to the free end is insertable into the interior of the hollow workpiece, and at least some of the guide parts are located in the insertable axial section, the guide parts located in the insertable axial section includes at least one of:
at least one link interconnecting the first and second members by means of rotary joints; and
at least one pair of guide parts, wherein the guide parts forming a pair are arranged to engage each other, the first member being provided with one of the guide parts of each pair and the second member being provided with the other guide part of each pair.

Mechanisms using a screw shaft to spread the first and second members, such as the one discussed above under the heading of background art, require space for the screw shaft. Furthermore, the thread must be able to withstand exposure to the liquid in which the workpiece is treated, in use. A link is a rigid body, or lever. A link directly interconnecting the first and second members by way of rotary joints at opposite ends of the link rotates to increase alignment with the device axis when the first and second members are displaced towards each other and will generally be situated adjacent the first and second members. The first and second members can be brought relatively close together. This allows the device to be inserted into narrow interior workpiece spaces. The rotary joints are between the link and a respective one of the first and second members, the axis of rotation being transverse to the device axis. Alternatively, or additionally, a pair of guide parts arranged to engage each other can form a bearing and each be fixed to or comprised in one of the first and second members. This variant is even more compact and robust.

In an embodiment of the device, the guide parts include at least one pair of guide parts, arranged for sliding engagement of each other along a contact path inclined with respect to the device axis.

This mechanism converts axial relative movement of the first and second members into movement transverse to the device axis. Where there are at least two such pairs at locations separated in axial direction, the result is a complete relative displacement of the first and second members. The driving force can be exerted in mainly axial direction. In the case of elongated first and second members, this will be the longitudinal direction of the driven one of the first and second members. This is the direction in which the driven member is best able to withstand large forces. There is relatively little bending moment. There is at least a point of contact, but generally a plane of contact. The locus of contact moves along the inclined contact path. The inclined contact path is otherwise defined by an inclined plane formed by a surface of one of the guide parts of the pair. Contact at any one particular time need not be along a continuous line or surface at any one time. It is sufficient if one of the two guide parts of the pair defines an inclined plane across which the other can move whilst retaining contact.

If the first member is provided with one of the guide parts of each pair and the second member is provided with the other guide part of each pair, the first and second members can be relatively slender, yet still exert a large force on the workpiece.

In an example of any embodiment of the device in which at least an axial section of the device extending to the free end is insertable into the interior of the hollow workpiece, and at least some of the guide parts are located in the insertable axial section, the guide parts located in the insertable axial section including at least one pair of guide parts arranged for sliding engagement of each other along a contact path inclined with respect to the device axis, the guide parts located in the insertable section include only guide parts comprised in the at least one pair of guide parts arranged for sliding engagement of each other along a contact path inclined with respect to the device axis.

Thus, at least the insertable section is relatively compact or can at least be reduced in width to allow for insertion into a relatively narrow interior of the workpiece.

In an example of any embodiment in which the guide parts include at least one pair of guide parts, arranged for sliding engagement of each other along a contact path inclined with respect to the device axis, each pair of guide parts arranged for sliding engagement of each other comprises a guide part protruding from one of the first and second members and a guide part defining an aperture in the other of the first and second members, e.g. an aperture formed by a hole through the other of the first and second members.

The first and second members can thus be displaced towards each other to within (almost) touching distance. The protruding part, which extends between them, moves into the aperture. Where the aperture is formed by a through-going hole, manufacturability is improved. In an example, the first member is provided with the protruding guide part and the second member is provided with the aperture. Thus, the apertures do not disturb the electrical current flow.

In a particular example of any embodiment in which the guide parts include at least one pair of guide parts, arranged for sliding engagement of each other along a contact path inclined with respect to the device axis, each pair of guide parts arranged for sliding engagement of each other comprises a guide part protruding from one of the first and second members and a guide part defining an aperture in the other of the first and second members, e.g. an aperture formed by a hole through the other of the first and second members, the aperture has an oblong shape, and a longer dimension of the aperture is oriented at least predominantly in axial direction.

The axial direction is again an axial direction with respect to the device axis. In this embodiment, the aperture does not result in excessive weakening of the member in which the aperture is provided. The protrusion can be relatively large and thus robust.

In a particular example of this embodiment, the protruding part has a wing-shape with a cross-section corresponding to the oblong shape.

The cross-section is such that the cross-sectional plane is parallel to the device axis and perpendicular to the plane in which the wing lies. The protrusion fits into the aperture relatively tightly. This further aids in maintaining alignment of the first and second members, in particular where they are elongated members having a longitudinal axis extending at least predominantly parallel to the device axis.

An embodiment of the device further comprises at least one biasing device arranged to exert a force tending to displace the first and second members away from each other in the direction transverse to the device axis.

Thus, the force holding the workpiece is generated and maintained by the biasing device. There can be some variability in the diameter of the interior of the workpieces to be held. The biasing device may comprise interacting magnets, one or more elastic elements, e.g. springs, etc.

An embodiment of the device further comprises an actuating mechanism for transferring an actuating force to at least one of the first and second members to drive the relative movement.

The actuating force need not act directly on the first and second members in this embodiment. The actuating mechanism may in particularly be located at least partly axially adjacent the first or second member to which the actuating force is transferred and distal to the free end. Thus, the actuating mechanism and the device generating the actuating force can be kept away from the liquid in which the workpiece is to be treated, in use. The first and second members can also be displaced to within a relatively small distance of each other in order to pick up a workpiece.

In an example of any embodiment of the device that further comprises at least one biasing device, arranged to exert a force tending to displace the first and second members away from each other in the direction transverse to the device axis, and an actuating mechanism for transferring an actuating force to at least one of the first and second members to drive the relative movement, the biasing device is arranged to exert an actuating force to drive the relative movement in one of two opposite directions.

The biasing device need not therefore be located directly in between the first and second members. It can be arranged away from the free end of the device, thus largely or completely avoiding contact with the electrochemical processing liquid, in use.

In an example of any embodiment of the device that further comprises an actuating mechanism for transferring an actuating force to at least one of the first and second members to drive the relative movement, the actuating mechanism comprises at least one driven part subjectable to an actuating force exerted by one of an actuator and an external device separate from the device to drive the relative movement in one of two opposite directions.

In such embodiments in which there is also a biasing device arranged to exert an actuating force, the biasing device is arranged to drive the relative movement in one of the two opposite directions and the actuating force exerted by the actuator or external device drives the relative movement in the other of the two opposite directions. The external device may be an actuator or simply a cam or other object, against or along which the driven part is moved when the device is moved. In that case, there need not be one actuator per device to bring about the relative movement of the first and second members.

In a particular example of any embodiment that further comprises an actuating mechanism for transferring an actuating force to at least one of the first and second members to drive the relative movement, wherein the actuating mechanism comprises at least one driven part subjectable to an actuating force exerted by one of an actuator and an external device separate from the device to drive the relative movement in one of two opposite directions, the actuating mechanism comprises a linkage arranged to change a direction of the actuating force from a direction at least predominantly transverse to the device axis to a direction at least predominantly parallel to the device axis.

The actuating force therefore need not act in the same direction as the direction of insertion of the device into the workpiece. This makes it easier to position the device accurately and still exert a relatively large actuating force. Where the force is needed to overcome a force exerted by a biasing device, the force exerted by the biasing device can be relatively large. A relatively large force can then be exerted on the workpiece. The linkage need not merely change the direction of the actuating force, but may also comprise one or more levers for magnifying or reducing the actuating force. The linkage may be a planar linkage or a spatial linkage. A planar linkage comprises levers linked by rotary joints, wherein the component parts each move in only a plane. In spatial linkages, the joints interconnecting the levers allow for three-dimensional movement paths.

In an example of any embodiment of the device that further comprises an actuating mechanism for transferring an actuating force to at least one of the first and second members to drive the relative movement, the actuating mechanism comprises a linkage, wherein the linkage comprises a path generator, supported at rotary joints in fixed position relative to one of the first and second members and at least one further rotary joint in fixed position relative to the other of the first and second members, the further rotary joint being arranged to move along a path at least predominantly parallel to the device axis.

The path generator may be a straight-line path generator. Such linkages are known (e.g. Watt's linkage, Peaucellier cell, Scott Russell straight-line generator). The linkage may be a planar linkage. The linkage need not directly interconnect the first and second members in the sense that one of the rotary joints is between a first or second member and a link in the linkage. There may be a part rigidly connected to the first or second member and connected by one of the rotary joints to a link in the linkage.

An embodiment of the device further comprises a mounting structure mountable in fixed position relative to an external support, wherein the first and second members are at least indirectly connected to the mounting structure.

The mounting structure can thus be used to mount the device to an external support, e.g. a flight bar, to move the entire device within an apparatus for electrochemical treatment of the workpiece held by the device. The first and second members are thereby suspended from the external support.

In an example of any embodiment of the device that further comprises a mounting structure mountable in fixed position relative to an external support, wherein the first and second members are at least indirectly connected to the mounting structure, the first member is arranged in fixed position relative to the mounting structure.

Positioning the device thereby positions the first member. This makes it easier to position the workpiece relative to, for example, a counter-electrode. The embodiment is also relatively simple and robust, because bearings for the first member are not required.

In an example of any embodiment of the device that further comprises an actuating mechanism for transferring an actuating force to at least one of the first and second members to drive the relative movement, and that further comprises a mounting structure mountable in fixed position relative to an external support, wherein the first and second members are at least indirectly connected to the mounting structure, the actuating mechanism is mounted to the support structure.

In this embodiment, the actuating force can be an external force acting on the device. The device is immobilised by the external support.

In an embodiment of the device, at least a section of at least the first member comprises an electrically conducting core and an electrically conducting cladding, and the core and the cladding differ in terms of material composition.

The core and cladding can both be mainly of metal, including alloys, although the cladding can additionally comprise a metal oxide, e.g. forming a passivation layer. The core may have at least one of a higher electrical conductivity and a higher thermal conductivity than the cladding. The cladding may, but for a possible passivation layer, have a larger resistance to corrosion. In a particular example, the core comprises copper and the cladding comprises titanium. This example is able to pass relatively large electrical currents without excessive heating. The example is also cheaper in terms of material costs than an alternative in which the first member is made mainly of titanium throughout.

In an embodiment of the device, only the first of the first and second members is electrically connectable to an electrical current supply.

This prevents short-circuits between the first and second members that might damage the device. The first and second members are electrically isolated from each other. Electrically isolating the second member from any support structures for mounting the device to an external support further contributes to avoiding leakage currents.

In an embodiment, the device comprises at least one joint connecting metal parts, permitting at least one of rotation and sliding motion of one of the metal parts relative to the other and comprising a bushing made of polymer material.

The bushing helps prevent fretting. This is a particular problem where the metal comprises titanium. On the other hand, titanium is able to withstand exposure to typical electrochemical treatment liquids relatively well. In an example, the polymer comprises at least a fluoropolymer. Examples include polyvinylfluoride, polyvinylidene fluoride, polytetrafluoroethylene and perfluorosulfonic acid (nafion). The joint may in particular be comprised in a linkage at least indirectly interconnecting the first and second members. Thus, the bushing also contributes to electrically isolating the first and second members from each other. The linkage may be the linkage in the actuating mechanism described above, for example.

In an embodiment, at least one of the first and second members is an elongated member having along at least a longitudinal section a cross-sectional shape with a contour of which a section on a radially outer side of that member, with respect to a longitudinal body axis of that member, is convex.

The convex section may be curved, e.g. semi-circular. This ensures at least one line of contact with a curved interior surface of the workpiece, in particular where that interior surface has a larger radius of curvature than the convex section. It is noted for the avoidance of doubt that the longitudinal section is a section of the elongated member in longitudinal direction, not a cross-section.

In an example of any embodiment in which at least one of the first and second members is an elongated member having along at least a longitudinal section a cross-sectional shape with a contour of which a section on a radially outer side of that member, with respect to a longitudinal body axis of that member, is convex, the section of the contour on the radially outer side comprises a section in between adjacent sections that both have a smaller radius of curvature than the section in between the adjacent sections, e.g. a straight section in between curved sections.

There are thus at least two lines of contact, one at each transition between the central section and one of the two adjacent sections. The hold on the workpiece is thus increased.

In an example of any embodiment of the device in which at least one of the first and second members is an elongated member having along at least a longitudinal section a cross-sectional shape with a contour of which a section on a radially outer side of that member, with respect to a longitudinal body axis of that member, is convex, the contour comprises a section on a radially inner side of that member, with respect to a longitudinal body axis of that member, that is one of:
straight;
a convex section having a radius of curvature with a larger absolute value than the section on the radially outer side; and
concave.

This allows the first and second member to be moved relatively close together and thus the lateral dimension of at least the section of the device extending to the free end to be temporarily reduced in lateral dimension by a relatively large amount.

According to another aspect of the invention, there is provided a device for holding and electrically contacting a plurality of hollow workpieces, comprising:
a movable support structure;
a system for moving and positioning the movable support structure; and
a plurality of devices for holding and electrically contacting a hollow workpiece, each according to the first aspect of the invention and mounted to the movable support structure.

This device can be used to pick up, hold, and thereby electrically contact, a plurality of workpieces relatively quickly. They can then be lowered into electrochemical treatment cells collectively for treatment and subsequently raised and transferred collectively. An electrochemical treatment apparatus comprising the device will thus have a relatively high throughput.

According to another aspect of the invention, there is provided an apparatus for electrochemical treatment of at least a respective exterior surface of at least one hollow workpiece, comprising:
a vessel for accommodating an electrolyte to form a treatment bath;
a movable support structure;
a system for moving and positioning the movable support structure relative to the vessel;
at least one electrode arranged within the vessel;
at least one device for holding and electrically contacting a hollow workpiece, each according to the first aspect of the invention and mounted to the movable support structure; and
at least one electrical current supply, each connected to at least one of the electrodes and to at least one of the devices for holding and electrically contacting a hollow workpiece.

In an embodiment of the apparatus, only the first of the first and second members of each of the at least one devices for holding and electrically contacting a hollow workpiece is electrically connected to one of the at least one electrical current supplies.

As explained, this helps avoid short-circuits that could damage the devices for holding and electrically contacting a hollow workpiece.

In an embodiment of the apparatus, at least one space is defined in an interior of the vessel by at least one of the least one electrodes, each space being surrounded by the at least one electrodes defining the space, wherein the positioning system is configured to lower at least a section comprising the free end of each of at least one, e.g. only one, of the at least one devices for holding and electrically contacting a hollow workpiece into a respective one of the at least one spaces.

The device for holding and electrically contacting a hollow workpiece is able to hold the workpiece relatively firmly in an intended orientation. Thus, relatively accurate centring of the workpiece in the space is made possible. This contributes to uniformity of treatment of the exterior surface of the workpiece.

### Brief Description of Drawings

The invention will be explained in further detail with reference to the accompanying drawings, in which:
- Fig. 1: is a schematic diagram of part of an apparatus for electrochemical treatment of at least a respective exterior surface of each of a plurality of hollow workpieces;
- Fig. 2: is a perspective view of an assembly of multiple holding devices mounted to a movable support structure;

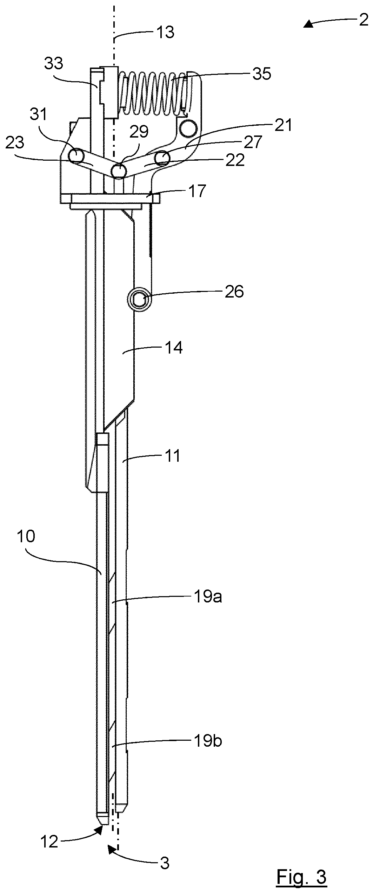

- Fig. 3: is a first side view of one device for holding and electrically contacting one of the hollow workpieces;

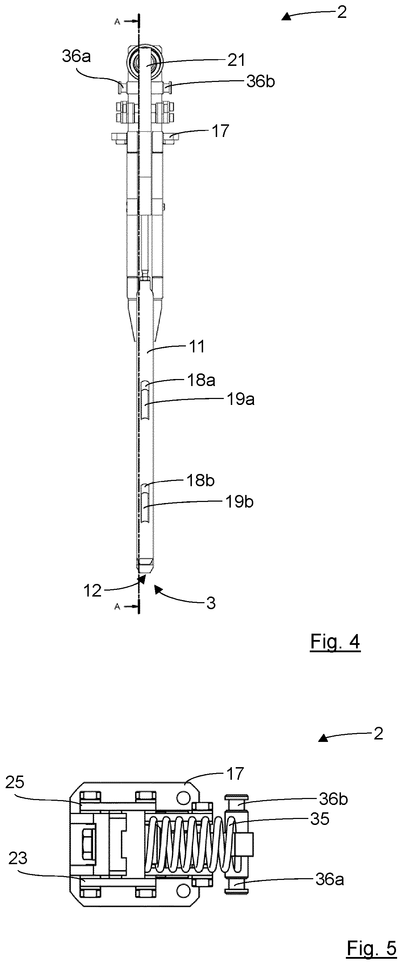

- Fig. 4: is a second side view of the device;
- Fig. 5: is a top view of the device;

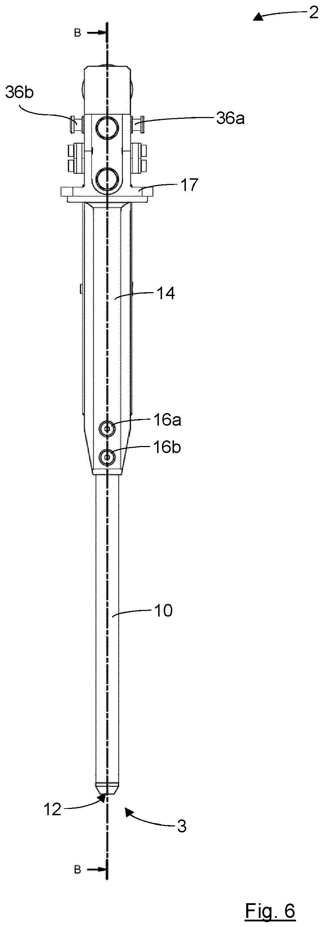

- Fig. 6: is a further side view of the device;
- Fig. 7: is a further side view of the device;
- Fig. 8: is a cross-section of the device taken along the line D-D of Fig. 7;
- Fig. 9: is an enlarged view of part of the cross-section of Fig. 8;
- Fig. 10: is a cross-section of the device taken along the line A-A of Fig. 4;
- Fig. 11: is a cross-section of the device taken along the line G-G of Fig. 10;
- Fig. 12: is a cross-section of the device taken along the line B-B of Fig. 6; and
- Fig. 13: is an enlarged view of part of the cross-section of Fig. 12.

### Description of Embodiments

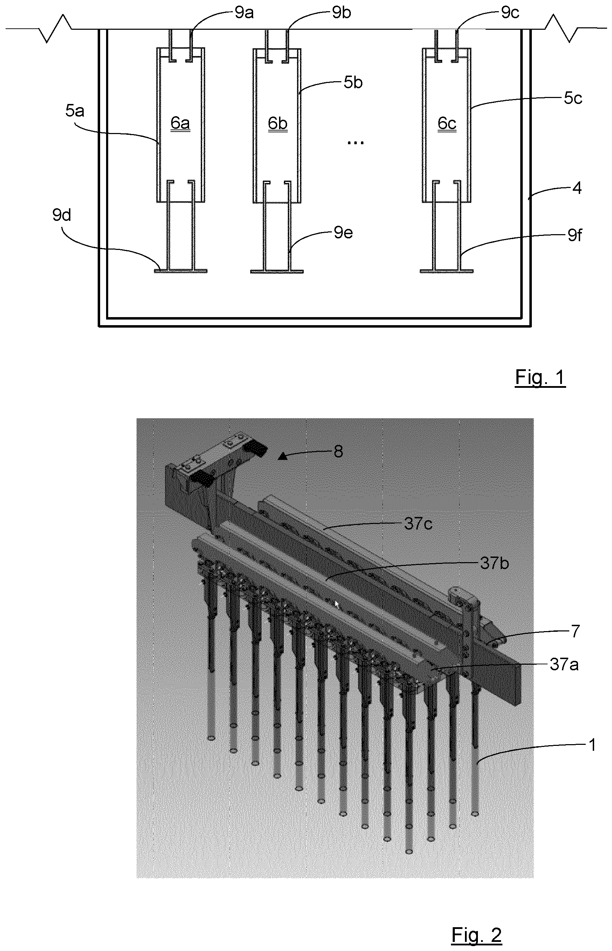

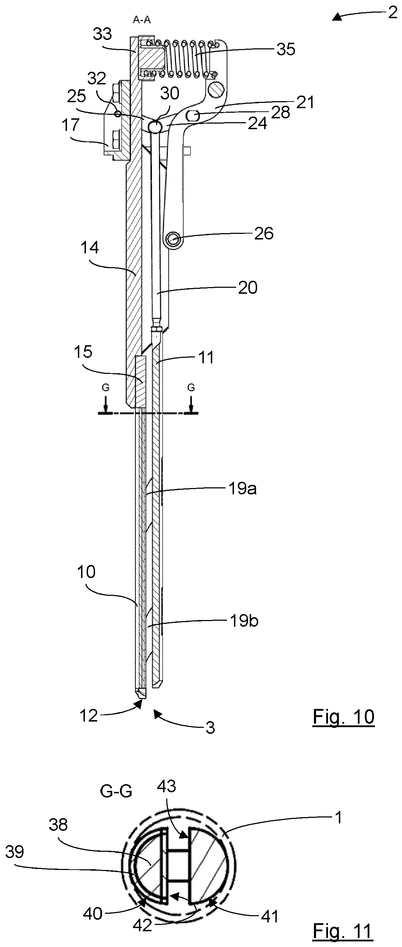

Fig. 1 schematically illustrates part of an apparatus for electrochemical treatment of a respective exterior surface of each of a plurality of hollow workpieces 1 (Figs. 2 and 11). The apparatus corresponds essentially to the ones disclosed in WO 98/06884 A1 and WO 00/11245 A2, which are, however, configured for electrochemical treatment of solid workpieces.

The workpieces 1 may in particular be elongated workpieces 1, with the hollow interior extending in longitudinal direction. The hollow interior is open to at least one side, allowing a device 2 (hereinafter: 'holding device') for holding and electrically contacting the hollow workpiece 1 to be inserted with at least a free end 3 into the hollow interior. The hollow interior may be a recess or open at opposite ends of the workpiece 1, e.g. opposite longitudinal ends in the case of an elongated workpiece 1. In a particular example, the workpieces are cylindrical with a circular cross-section, as is the hollow interior. The workpiece may, for example, be a cylinder for forming a component part of a shock absorber for a vehicle. With increasing electrification of vehicles such as cars, bicycles and mopeds, shock absorber parts have needed to become stronger and thereby increased in mass. This means that relatively large forces are required if such component parts are to be held through friction.

Examples of electrochemical treatment include etching, electrochemical cleaning and electroplating, e.g. with chrome.

The apparatus includes a vessel 4 (Fig. 1) for accommodating a liquid electrolyte to form an electrochemical treatment bath, into which the workpieces can be lowered for treatment.

Arranged in the vessel 4 are a plurality of electrodes 5a-c. In an electroplating application, the electrodes 5a-c function as anodes. The electrodes 5a-c are electrically connected, in use, to an electrical current supply. They may be connected in parallel to a common electrical current supply, each individually to a respective one of multiple electrical current supplies or arranged in groups of electrodes connected in parallel to a respective electrical current supply associated with that group.

Spaces 6a-c are defined in the interior of the vessel 4 by the electrodes 5a-c. Each space 6 is for receiving one hollow workpiece 1 held by a respective holding device 2. Multiple holding devices 2 are mounted to a flight bar 7 comprised in a movable support structure 8 (Fig. 2). The apparatus comprises a system for moving and positioning the movable support structure 8 with respect to the vessel 4. This system allows to lower the workpieces 1 collectively into the respective spaces 6a-c defined by the electrodes 5a-c for treatment and to raise them upon treatment. The workpieces can also be moved laterally to pick-up and transfer stations (not shown), from where they are picked up and handed over, respectively.

The holding devices 2 may be mounted in fixed position to the movable support structure 8. Alternatively, the movable support structure 8 may comprise actuators for limited re-positioning of at least one of the holding devices 2, e.g. to adjust their mutual spacing.

Each space 6a-c is accessible to the liquid electrolyte, in use. Electrical shielding devices 9a-f are arranged at opposite axial ends of each space 6a-c. The shielding devices may be in accordance with any of WO 98/06884 A1, WO 00/11245 A2 or EP 3 719 180 A1, for example. The shielding devices 9a-f engage the exterior surfaces of the workpiece 1, in use. The shielding devices 9a-f comprise electrically insulating parts (not shown) for shaping the electrical field between workpiece 1 and the electrode 5, in use. This shaping is such that the electrical field is contained between the electrode 5 and the section of the workpiece 1 on the side of the shielding device proximal to the electrode 5. Any electrical field lines between the end section of the workpiece 1 on the other side of the shielding device 9 and the electrode 5 thus have to run around the insulating parts of the shielding device 9. Practically, electrochemical treatment of these end sections is thereby prevented. This also holds true for at least those parts of the holding device 2 that are not inserted into the workpiece 1 to hold the workpiece 1.

The holding device 2 comprises a first member 10 and a second member 11. At least the first member 10 is electrically conducting. A tip 12 of the first member 10 forms the free end 3 of the holding device 2.

The first member 10 and the second member 11 are elongated members. The first member 10 has a longitudinal axis extending parallel to a device axis 13 (Fig. 2) to within manufacturing tolerances. The second member 11 has a longitudinal axis extending predominantly parallel to the device axis 13, but is movable, so that slight variations to within 5° or even 3°, 2° or 1° are possible during use. An orientation predominantly parallel to the device axis 13 is, however, preserved during movement.

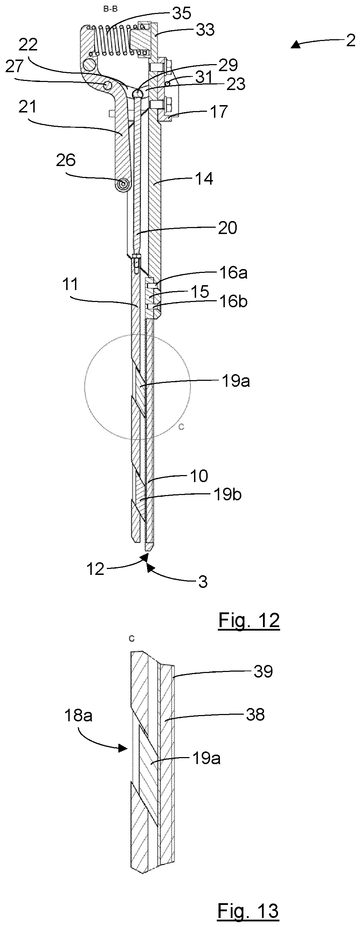

An end section of the first member 10 at an opposite end to the tip 12 is fixed to a bracket 14 comprised in a support structure. The end section forms a terminal 15 (Figs. 10, 12) for passing electrical current between the bracket 14 and the first member 10. In the illustrated embodiment, screws 16a,b connect the terminal 15 to the bracket 14. In other embodiments, the first member 10 may be welded to the bracket 14. The bracket 14 is thus arranged to carry the electrical current. In another embodiment, the bracket 14 merely supports the first member 10 and a separate conductor is fixed to the terminal 15, either permanently or by means of a plug-and-socket connection.

The support structure further comprises a mounting structure 17 for mounting the holding device 2 to an external support, in particular the movable support structure 8. Because the bracket is fixed to the mounting structure 17 and the first member 10, the first member 10 is immobilised with respect to the external support to which the holding device 2 is mounted. Positioning the external support, in this case the movable support structure 8, positions the first member 10.

The second member 11 is guided for movement with respect to the first member 10. The movement comprises a component in the form of a displacement in the axial direction with respect to the device axis 13 and a component in the form of a displacement of the entire second member 11 in a direction transverse thereto. The longitudinal axes of the first and second members remain at the same angle to each other, so that there is no pivoting movement. As mentioned, this angle may be as close to 0° as is achievable within the applicable manufacturing tolerances.

The movement is guided by guide parts, in the illustrated embodiment two pairs of guide parts. One guide part of each pair is a section of the second member 11 in which a through-going hole 18a,b is formed. At the end proximal to the first member 10, each of the holes 18a,b defines a respective aperture. The other guide part of each pair is a wing-shaped protrusion 19a,b provided on the first member 10 and inserted through the aperture. Seen in a direction perpendicular to the device axis 13 and the direction of movement of the protrusion 19a,b into the aperture, the protrusions 19 each have the shape of a parallelogram. Edges of the parallelogram extending between the leading edge of the protrusion 19a,b and the first member 10 are inclined with respect to the device axis 13. The apertures are oblong-shaped and the minor edges of the oblong shape slidingly engage the inclined surfaces of the protrusions extending parallel to and from the inclined edges just mentioned. Thus, the axial movement of the second member 11 is converted into movement in the transverse direction.

Seen in cross-section with the cross-sectional plane parallel to the device axis 13 and perpendicular to the major surfaces of the wing-shaped protrusions 19a,b, each protrusion 19a,b has a cross-section with an outer contour corresponding in shape to the oblong shape of the aperture. Thus, the long edges of the aperture contribute to maintaining the orientation of the first and second members 10,11.

The holding device 2 further comprises an actuating mechanism. The actuating mechanism is arranged to transfer an actuating force to the second member 11 to drive the movement of the second member 11. The actuating mechanism thereby changes the direction of the actuating force such that this force is exerted on the second member 11 in a direction predominantly parallel to the device axis 13.

In the illustrated embodiment, the actuating mechanism comprise a linkage, in this example a planar linkage, and a drive bar 20 connecting the linkage to an axial end of the second member 11 distal to the free end 3 of the holding device 2. The drive bar 20 is rigidly connected to the second member 11 in the illustrated embodiment. Thus, the actuating mechanism can be considered also to comprise guide parts. In an alternative, the drive bar 20 is replaced by a lever of the linkage that is connected to the second member 11 by means of a rotary joint or a ball joint.

The linkage comprises a main link 21 in the form of a lever and first, second third and fourth interconnecting links 22-25. The lever is in this case a second-class lever.

A first rotary joint 26 connects the main link 21 to the support structure, in this example the bracket 14. In this example, in which the main link 21 is a lever, the first rotary joint 26 forms the fulcrum of the lever.

A second rotary joint 27 connects the main link 21 to a first interconnecting link 22. A third rotary joint 28 connects the main link to a third interconnecting link 24. A fourth rotary joint 29 connects the first interconnecting link 22 to both the drive bar 20 and the second interconnecting link 23. A fifth rotary joint 30 connects the third interconnecting link 24 to both the drive bar 20 and the fourth interconnecting link 25. A sixth rotary joint 31 connects the second interconnecting link 23 to the support structure, in this example a part of the mounting structure 17. A seventh rotary joint 32 connects the fourth interconnecting link 25 to the support structure, in this example a further part of the mounting structure 17. Thus, the linkage is mounted to the support structure. The linkage defines a path of movement of the fourth and fifth rotary joints 29,30, namely a path extending predominantly parallel to the device axis 13. The path may extend in a straight line or an approximately straight line.

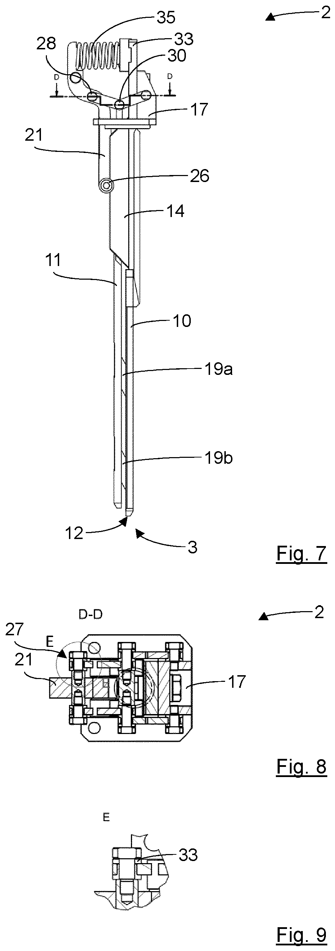

The links 21-25 and the bracket 14, including the extension 33 are made of metal, e.g. titanium. To avoid fretting and ensure that the second member 11 is electrically isolated from the first member 10 and the support structure, each of the rotary joints 26-32 comprises at least one bushing 34 (Fig. 9) made of polymer material. The polymer material may comprise a fluorinated polymer, e.g. PVDF (polyvinylidene fluoride).

The electrical isolation is also such as to isolate the main link 21 electrically from the remainder of the holding device 2. It is thereby also avoided that there are currents running between the actuating mechanism and the device exerting an actuating force, or indeed through any of the links 21-25 or other parts of the actuating mechanism. In this regard, it is noted that the holding device 2 may be configured to conduct currents at least in the order of up to 400 A through the first member 10. Embodiments may be configured to conduct currents in the range of 750 - 1000 A.

In the illustrated embodiment, one device exerting an actuating force is an elastic element in the form of a spring 35. In this example, the spring 35 is a compression spring. The spring 35 of this example extends between the main link 21 and the support structure, more particularly an extension 33 of part of the bracket 14. Where present, as in this example, the electrical insulation in the rotary joints 26-32 ensures that no currents are conducted through the spring 35, even though the bracket 14 is a current-carrying part, in use.

The actuating force exerted by the spring 35 is a biasing force tending to move the first and second members 10,11 away from each other in the direction transverse to the device axis 13. The actuating mechanism is configured such that the actuating force is magnified and the direction is changed from a transverse direction to a direction at least predominantly parallel to the device axis 13 and directed away from the free end 3. Thus, the second member 11 is biased to move away from the free end 3 and away from the first member 10. In an embodiment, a stop (not shown) limits movement of the actuating mechanism, e.g. the fourth and fifth rotary joints 29,30, in the direction in which the actuating force exerted by the biasing device drives the mechanism. This prevents the links 21-25 from assuming a position from which they are difficult to move or in which the rotary joints 26-32 are subjected to too much force.

The main link 21 is provided with pins 36a,b for engaging one of a number of actuating bars 37a-c (Fig. 2) arranged on the movable support structure 8. The actuating bar 37 is locked to the actuating mechanisms of each of a plurality of holding devices 2 mounted in a row to the movable support structure 8. The actuating bar 37 is in turn arranged to be coupled to an actuator (not shown) or to engage an external device such as a cam. In this way, the actuating bar 37 subjects the pins 36a,b to an actuating force to drive the main link 21 towards the extension 33. The actuating mechanism is configured such that the actuating force is magnified and the direction is changed from a transverse direction to a direction at least predominantly parallel to the device axis 13 and directed towards the free end 3. Thus, the second member 11 is driven towards the free end 3 and towards the first member 10. This is done prior to insertion into the workpiece 1 and when the workpiece is to be released.

In the illustrated embodiment, the first member 10 comprises an electrically conducting core 38 and an electrically conducting cladding 39 (Fig. 11). The core 38 and the cladding 39 differ in terms of material composition. Generally, at least one of the thermal and electrical conductivity of the core 38 will be higher than that of the cladding 39. The material of the cladding 39 may on the other hand be selected to withstand exposure to the electrochemical treatment liquid in the vessel 4 better than the material of the core 38, e.g. to have a higher corrosion resistance.

In an embodiment, the material of the core 38 comprises at least one of copper and a copper alloy. The material of the cladding 39 comprises at least one of titanium, a titanium alloy and titanium oxide. The cladding 39 may, for example, be made of titanium and therefore comprise a passivation layer.

Other structural parts of the holding device 2, e.g. the second member, may have an essentially uniform material composition (with the exception of possible surface layers) and be made of the same material as the cladding 39.

The holding device 2 is adapted for insertion into a cylindrical interior of the workpiece 1. This interior has a relatively high aspect ratio. As illustrated in Fig. 11, the first and second members 10,11 each have, along the majority of their respective lengths, a cross-sectional shape of which an outer contour comprises a semi-circular outer contour section 40,41 and a straight inner contour section 42,43. The radius of curvature of the outer contour sections 40,41 is smaller than that of the interior surface of the workpiece that they are configured to engage, again seen in cross-section. This results in respective lines of contact predominantly parallel to the device axis 13. The workpiece 1 is thereby aligned with the device axis 13.

The same effect can be achieved with outer contour sections 40,41 that are not semi-circular but curved or that extend over less than 180°. The inner contour sections 42,43 may be convex with a larger radius of curvature than the outer contour sections 40,41 or concave in other embodiments. Compared to cylindrically-shaped first and second members 10,11, the first and second members 10,11 can be moved relatively close together.

In an alternative embodiment (not shown), the outer contour sections 40,41 each comprise three sub-sections, with the middle sub-section having a larger radius of curvature than the adjacent sub-sections in between which the middle sub-section is situated. The middle sub-section may be straight, having an infinitely large radius of curvature. In such an alternative embodiment, there are two lines of contact predominantly parallel to the device axis 13 for each of the first and second members 10,11. Having more lines of contact improves the hold on the workpiece 1, reduces electrical resistance and may also reduce voltage gradients across the exterior surface of the workpiece. Since the second member 11 is not connected to a current supply, in use, it is also possible for only the outer contour section 40 to comprise sub-sections in the manner described.

The invention is not limited to the embodiments described above, which may be varied within the scope of the accompanying claims. For instance, instead of providing the actuating bar 37 to subject multiple holding devices 2 to an actuating force simultaneously, each holding device 2 may be operated individually. One or more parts of the support structure, e.g. the bracket 14 may also be provided with a core and a cladding of similar composition to the core 38 and cladding 39 of the first member 10.

### List of reference numerals

- 1: - workpiece
- 2: - holding device
- 3: - free end
- 4: - vessel
- 5a-c: - electrodes
- 6a-c: - spaces
- 7: - flight bar
- 8: - movable support structure
- 9a-f: - shielding devices
- 10: - first member
- 11: - second member
- 12: - tip of first member
- 13: - device axis
- 14: - bracket
- 15: - terminal
- 16a,b: - screws
- 17: - mounting structure
- 18a,b: - holes
- 19a,b: - protrusions
- 20: - drive bar
- 21: - main link
- 22: - first interconnecting link
- 23: - second interconnecting link
- 24: - third interconnecting link
- 25: - fourth interconnecting link
- 26: - first rotary joint
- 27: - second rotary joint
- 28: - third rotary joint
- 29: - fourth rotary joint
- 30: - fifth rotary joint
- 31: - sixth rotary joint
- 32: - seventh rotary joint
- 33: - extension
- 34: - bushing
- 35: - spring
- 36a, b: - pins
- 37a-c: - actuating bars
- 38: - core
- 39: - cladding
- 40: - outer contour section (first member)
- 41: - outer contour section (second member)
- 42: - inner contour section (first member)
- 43: - inner contour section (second member)

## Claims

1. Device for holding and electrically contacting a hollow workpiece (1), for insertion with at least a free end (3) in an axial direction into an interior of the hollow workpiece (1), which device comprises a first member (10) and a second member (11) for engaging the hollow workpiece (1),
wherein at least the first member (10) is electrically conducting and comprises at least one terminal (15) for electrically connecting the first member (10) to an electrical current supply,
wherein the first and second members (10,11) are oriented to extend at least predominantly parallel to the device axis (13),
wherein the device comprises guide parts (19a,b) for guiding relative movement of the first and second members (10,11),
wherein at least a component of the relative movement is a displacement transverse to the device axis (13), and
wherein the guide parts (19a,b) comprise at least one guide part fixed in position with respect to the first member (10) and engaging a further guide part at a respective engagement location, the engagement permitting relative motion,
**characterised in that**
the engagement locations are separate from the at least one terminal (15).

2. Device according to claim 1,
wherein at least an axial section of the device extending to the free end (3) is insertable into the interior of the hollow workpiece (1), and
wherein at least some of the guide parts (19a,b) are located in the insertable axial section.

3. Device according to claim 2,
wherein the guide parts (19a,b) located in the insertable axial section includes at least one of:
at least one link interconnecting the first and second members by means of rotary joints (about parallel respective axes transverse to the device axis); and
at least one pair of guide parts (19a,b), wherein the guide parts (19a,b) forming a pair are arranged to engage each other, the first member (10) being provided with one of the guide parts (19a,b) of each pair and the second member (11) being provided with the other guide part of each pair.

4. Device according to any one of the preceding claims,
wherein the guide parts (19a,b) include at least one pair of guide parts (19a,b), arranged for sliding engagement of each other along a contact path inclined with respect to the device axis (13), e.g. wherein the first member (10) is provided with one of the guide parts (19a,b) of each pair and the second member (11) is provided with the other guide part of each pair.

5. Device according to claim 3 and 4,
wherein the guide parts (19a,b) located in the insertable section include only guide parts (19a,b) comprised in the at least one pair of guide parts (19a,b) arranged for sliding engagement of each other along a contact path inclined with respect to the device axis (13).

6. Device according to claim 4 or 5,
wherein each pair of guide parts (19a,b) arranged for sliding engagement of each other comprises a guide part (19a,b) protruding from one of the first and second members (10,11) and a guide part defining an aperture in the other of the first and second members (10,11), e.g. an aperture formed by a hole (18a,b) through the other of the first and second members (10,11).

7. Device according to any one of the preceding claims,
further comprising an actuating mechanism for transferring an actuating force to at least one of the first and second members (10,11) to drive the relative movement.

8. Device according to claim 7,
wherein the actuating mechanism comprises at least one driven part (36a,c) subjectable to an actuating force exerted by one of an actuator and an external device (37a-c) separate from the device to drive the relative movement in one of two opposite directions.

9. Device according to claim 8,
wherein the actuating mechanism comprises a linkage arranged to change a direction of the actuating force from a direction at least predominantly transverse to the device axis (13) to a direction at least predominantly parallel to the device axis (13).

10. Device according to any one of claims 7-9,
wherein the actuating mechanism comprises a linkage, wherein the linkage comprises a path generator, supported at rotary joints (26,31,32) in fixed position relative to one of the first and second members (10,11) and at least one further rotary joint (29,30) in fixed position relative to the other of the first and second members (10,11), the further rotary joint (29,30) being arranged to move along a path at least predominantly parallel to the device axis (13).

11. Device according to any one of the preceding claims,
wherein at least a section of at least the first member (10) comprises an electrically conducting core (38) and an electrically conducting cladding (39), and
wherein the core (38) and the cladding (39) differ in terms of material composition.

12. Device according to any one of the preceding claims,
wherein at least one of the first and second members (10,11) is an elongated member (10,11) having along at least a longitudinal section a cross-sectional shape with a contour of which a section (40,41) on a radially outer side of that member (10,11), with respect to a longitudinal body axis of that member (10,11), is convex.

13. Device according to claim 12,
wherein the contour comprises a section (42,43) on a radially inner side of that member (10,11), with respect to a longitudinal body axis of that member (10,11), that is one of:
straight;
a convex section having a radius of curvature with a larger absolute value than the section on the radially outer side; and
concave.

14. Device for holding and electrically contacting a plurality of hollow workpieces (1), comprising:
a movable support structure (8);
a system for moving and positioning the movable support structure (8); and
a plurality of devices (2) for holding and electrically contacting a hollow workpiece (1), each according to any one of the preceding claims and mounted to the movable support structure (8).

15. Apparatus for electrochemical treatment of at least a respective exterior surface of at least one hollow workpiece (1), comprising:
a vessel (4) for accommodating an electrolyte to form a treatment bath;
a movable support structure (8);
a system for moving and positioning the movable support structure (8) relative to the vessel (4);
at least one electrode (5a-c) arranged within the vessel (4);
at least one device (2) for holding and electrically contacting a hollow workpiece (1), each according to any one of claims 1-13 and mounted to the movable support structure (8); and
at least one electrical current supply, each connected to at least one of the electrodes (5a-c) and to at least one of the devices (2) for holding and electrically contacting a hollow workpiece (1).
